# EUROPEAN PATENT SPECIFICATION

(11) **EP 2 602 929 B1**
(45) Date of publication and mention of the grant of the patent: **17.02.2016**
(21) Application number: 11192462.7
(22) Date of filing: 07.12.2011
(51) Int. Cl.: H02P 23/00, B60L 3/00, B60L 11/12, B60L 15/02, H02K 11/00, G05B 19/042, G05B 19/409, B60L 15/20

(54) **A system and a method for commissioning an electrical drive**
System und Verfahren zur Inbetriebsetzung eines elektrischen Antriebs
Système et procédé pour la mise en service d'une commande électrique

(43) Date of publication of application: 12.06.2013
(73) Proprietor: Visedo Oy, 53850 Lappeenranta (FI)
(72) Inventor: Rauma, Kimmo, 53850 Lappeenranta (FI)
(74) Representative: Berggren Oy Ab

(56) References cited:
- EP-A1- 0 304 574
- EP-A1- 1 246 345
- EP-A2- 2 169 488
- US-A1- 2008 147 258
- US-B1- 6 555 984

## Description

### Field of the invention

The invention relates generally to electrical drives supplied with an electronic power converter. More particularly, the invention relates to a method and a system for commissioning an electrical drive. Furthermore, the invention relates to an electronic power converter of an electrical drive. Furthermore, the invention relates to an electrical machine. Furthermore, the invention relates to a mobile working machine comprising an electrical drive.

### Background

In many applications the torque produced by an electrical machine has to be controlled more accurately than it would be achievable merely by controlling the frequency and amplitude of the supply voltage of an alternating current machine or the supply voltage of a direct current machine. The accuracy of the torque control can be improved by controlling instantaneous values of voltages and currents on the basis of a model which models the electro-magnetic properties of an electrical machine. In conjunction with alternating current machines, the model is typically based on the space vectors of voltages and currents, and on inductances of the electrical machine. Furthermore, the model may comprise resistances of the windings of the electrical machine and, in a case of a permanent magnet electrical machine, the magneto-motive force generated by the permanent magnets. The inductances can be, for example, the magnetizing inductance between the rotor and the stator and the stray inductances of the windings of the electrical machine. The control principle where the voltages and currents are controlled not only concerning their frequencies and amplitudes but also concerning their phases is typically called vector control, whereas the control principle based on only the frequencies and the amplitudes is typically called scalar control.

Especially, the inductances of electrical machines are specific to each electrical machine as an individual device, i.e. there can be differences between inductances of similar electrical machines which can be e.g. from a same production series. The differences can be caused by, for example, differences in lengths and/or positions of end windings and differences in mutual positions of electrical conductors in stator slots. A rating plate attached to the housing of an electrical machine does not usually provide information about the inductances and other properties specific to the electrical machine as an individual device. Therefore, the commissioning of an electrical drive based on the vector control usually contains an identification run where an electronic power converter of the electrical drive supplies test voltages to an electrical machine and measures currents responsive to the text voltages so as to form estimates for the inductances and possibly for other properties of the electrical machine. In many cases, an inconvenience related to the identification run is a requirement that the electrical machine is allowed to rotate freely during the identification run. Therefore, it is typical that the electrical machine cannot be mechanically connected to its load during the identification run. This complicates, for example, replacing a faulty power converter or a faulty electrical machine with a new one.

Publication EP1246345 describes an electrical machine provided with a memory device encoded to contain parameters such as for example a maximum speed and a maximum operating temperature. In spite of these parameters, an identification run is needed in commissioning of an electrical drive comprising an electrical machine of the kind described in EP1246345.

### Summary

The following presents a simplified summary in order to provide a basic understanding of some aspects of various invention embodiments. The summary is not an extensive overview of the invention. It is neither intended to identify key or critical elements of the invention nor to delineate the scope of the invention. The following summary merely presents some concepts of the invention in a simplified form as a prelude to a more detailed description of exemplifying embodiments of the invention.

In accordance with the first aspect of the invention, there is provided a new system for commissioning an electrical drive that comprises:
- an electrical machine, and
- an electronic power converter connected to the windings of the electrical machine and arranged to control the electrical machine at least partly on the basis of parameter data expressing one or more inductances which are specific to the electrical machine as an individual electrical machine.

The parameter data expresses the one or more machine-individual specific inductances so that at least one inductance value expressed by the parameter data is different from a corresponding inductance value expressed by corresponding parameter data related to another electrical machine from a same production series as the electrical machine of the above-mentioned electrical drive.

The system according to the invention comprises a memory device that is attached to or otherwise associated with the electrical machine encoded with the parameter data and data transfer equipment for reading the parameter data from the memory device and for loading the parameter data to the electronic power converter. In addition to the inductances, the parameter data may comprise information about, for example, winding resistances, magnetic flux or magneto-motive force produced by permanent magnets, and/or other properties of the electrical machine. The memory device can be, for example, attached to the housing of the electrical machine. For another example, the memory device can be attached to a maintenance manual of a product, e.g. a mobile working machine, comprising the electrical drive. The data transfer equipment may comprise, for example, a radio frequency identifier "RFID" transmitter integrated with the memory device and a hand-held device that includes an RFID-reader and a wireless or wired data interface for loading the parameter data to the electronic power converter.

The above-described system makes the identification run needless because the machine specific parameter data is available in the memory device that is attached to or otherwise associated with the electrical machine. When, for example, a faulty electrical machine has to be replaced with a new electrical machine, the electronic power converter is easy to configure to operate with the new electrical machine by loading, to the electronic power converter, parameter data from the memory device that is attached to or otherwise associated with the new electrical machine. Correspondingly, a new electronic power converter is easy to configure to operate with an existing electrical machine by loading, to the new electronic power converter, the parameter data from the memory device that is attached to or otherwise associated with the existing electrical machine.

In accordance with the second aspect of the invention, there is provided a new electronic power converter. The electronic power converter according to the invention comprises:
- a power stage for supplying voltages to windings of an electrical machine,
- a controller arranged to control the power stage at least partly on the basis of parameter data expressing one or more inductances which are specific to the electrical machine as an individual electrical machine, and
- a wired or wireless data interface for receiving the parameter data from an external device.

The electronic power converter can be, for example, a frequency converter suitable for supplying an alternating current machine or a controllable direct voltage supply, e.g. a thyristor bridge, suitable for supplying a direct current machine.

In accordance with the third aspect of the invention, there is provided a new electrical machine. The electrical machine according to the invention comprises a rotor, a stator, and a memory device attached to a housing of the electrical machine. The memory device is encoded with parameter data expressing one or more inductances which are specific to the electrical machine as an individual electrical machine and the memory device is provided with a wired or wireless data interface for outputting the parameter data to an external device.

In accordance with the fourth aspect of the invention, there is provided a new method for commissioning an electrical drive that comprises:
- an electrical machine, and
- an electronic power converter connected to the windings of the electrical machine and arranged to control the electrical machine at least partly on the basis of parameter data expressing one or more inductances which are specific to the electrical machine as an individual electrical machine,

The method according to the invention comprises reading the parameter data from a memory device that is attached to or otherwise associated with the electrical machine attached to or otherwise associated with the electrical machine and subsequently loading the parameter data to the electronic power converter.

In accordance with the fifth aspect of the invention, there is provided a new mobile working machine. The mobile working machine comprises:
- a combustion engine, and
- an electromechanical power transmission chain between the combustion engine and one or more wheels of the mobile working machine,
wherein the electromechanical transmission chain comprises at least one electronic power converter according to the present invention.

The mobile working machine comprises preferably a liquid cooling system arranged to cool both a hydraulic system of the mobile working machine and the electromechanical power transmission chain. The mobile working machine can be, for example, a tractor, a bucket charger, a road drag, a bulldozer, or any other working machine having wheels and/or chain tracks.

A number of non-limiting exemplifying embodiments of the invention are described in accompanied dependent claims.

Various exemplifying embodiments of the invention both as to constructions and to methods of operation, together with additional objects and advantages thereof, will be best understood from the following description of specific exemplifying embodiments when read in connection with the accompanying drawings.

The verb "to comprise" is used in this document as an open limitation that neither excludes nor requires the existence of unrecited features. The features recited in depending claims are mutually freely combinable unless otherwise explicitly stated.

### Brief description of the figures

The exemplifying embodiments of the invention and their advantages are explained in greater detail below in the sense of examples and with reference to the accompanying drawings, in which:
figures 1 a and 1 b show schematic illustrations of systems according to embodiments of the invention for commissioning an electrical drive,
figure 2 shows a flow chart of a method according to an embodiment of the invention for commissioning an electrical drive, and
figure 3 shows a schematic illustration of a mobile working machine according to an embodiment of the invention.

### Description of the exemplifying embodiments

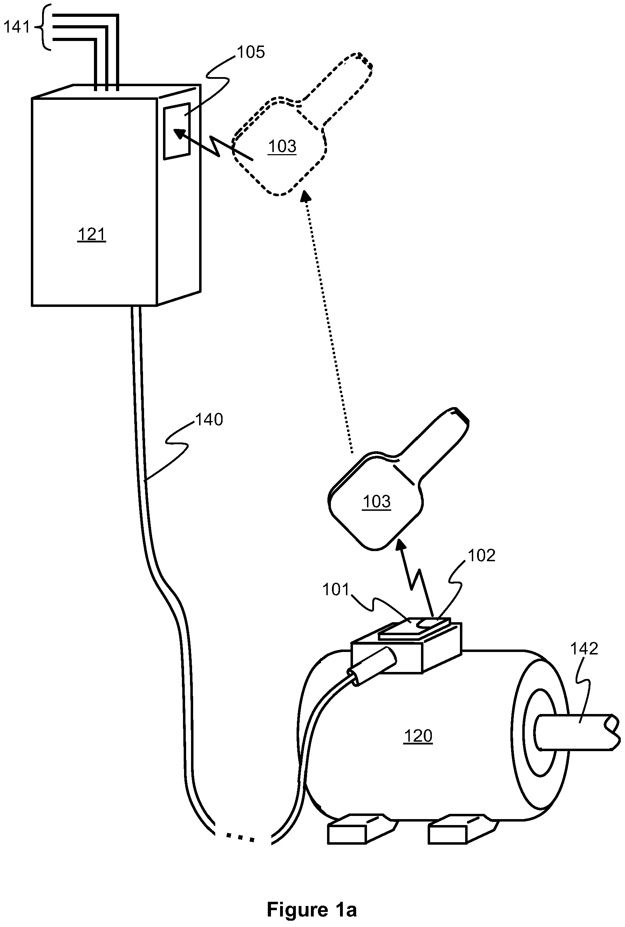

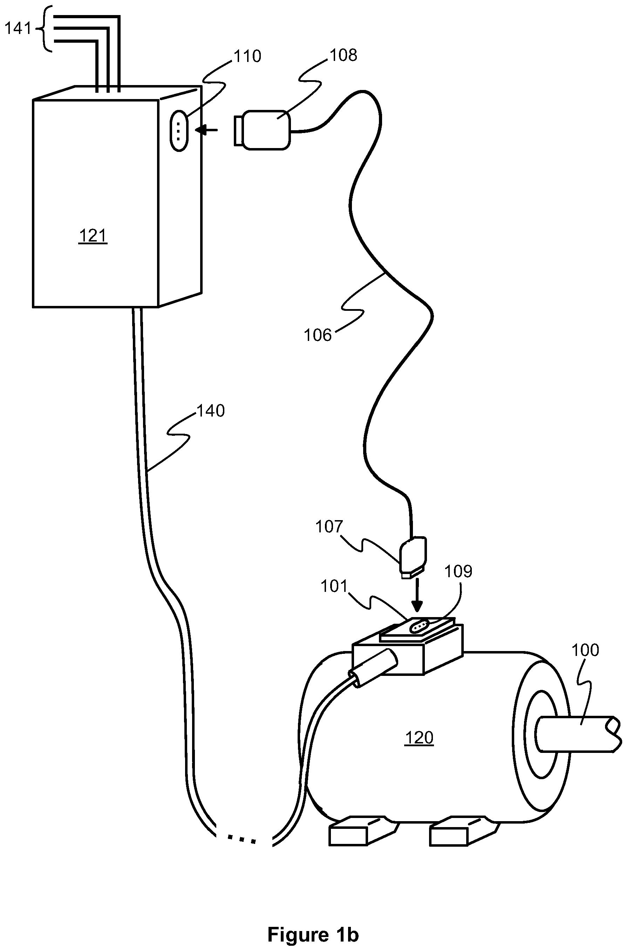

Figure 1 a shows a schematic illustration of a system according to an embodiment of the invention for commissioning an electrical drive that comprises an electronic power converter 121 and an electrical machine 120. The electronic power converter is connected via a cable 140 to the windings of the electrical machine. The electronic power converter is arranged to control the electrical machine at least partly on the basis of parameter data expressing one or more inductances which are specific to the electrical machine as an individual electrical machine. The electronic power converter 121 can be, for example, a frequency converter that is arranged to provide vector control of the electrical machine 120 so that the voltages and currents of the electrical machine are controlled not only concerning their frequencies and amplitudes but also concerning their phases. The electronic power converter is connected via a line 141 to an external electrical system, e.g. a generator, and the shaft 142 of the electrical machine is connected to an external mechanical system, e.g. a wheel of a mobile working machine.

The system for commissioning the electrical drive comprises a memory device 101 that is encoded with the above-mentioned parameter data expressing the one or more inductances which are specific to the electrical machine 120 as an individual electrical machine. The system further comprises data transfer equipment for reading the parameter data from the memory device and for loading the parameter data to the electronic power converter.

In the exemplifying system illustrated in figure 1a, the memory device 101 is attached to a housing of the electrical machine 120. It is also possible that the memory device is otherwise associated with the electrical machine. For example, the memory device can be a part of a maintenance manual of a product comprising the electrical drive. The memory device can be, for example, detachably attached to the maintenance manual and the memory device can comprise a data interface, e.g. a Universal Serial Bus "USB" port, connectable to the electronic power converter. Furthermore, it is also possible that the memory device is located in a server, and the parameter data is retrievable from the server via a data transfer network, e.g. the Internet, with the aid of identification data of the electrical machine 120. It is also possible that there is one memory device attached to the housing of the electrical machine and one or more other memory devices for example in a maintenance manual and/or in a server, wherein all the memory devices are encoded with the parameter data. Thus, there is a lot of possible ways how the memory device encoded with the parameter data can be associated with the electrical machine. In the case where the memory device is located in a server, the memory device can be a part of a mass storage device. For example, the memory device can be a relevant segment of a hard disc.

In the exemplifying system illustrated in figure 1a, the data transfer equipment comprises a hand-held device 103 that is capable of reading the parameter data wirelessly from the memory device 101. The data transfer equipment may comprise, for example, a radio frequency identifier "RFID" transmitter 102 that is integrated with the memory device 101. Correspondingly, the hand-held device 103 may comprise an RFID-reader for reading the parameter data from the memory device. The term "radio frequency identifier" and the corresponding acronym "RFID" refers in this document to the technology used in conjunction with the traditional radio frequency identification. The hand-held device 103 comprises a data interface for loading the parameter data to the electronic power converter 121. The data link between the hand-held device and the electronic power converter may comprise, for example, an RFID-transmitter integrated with the hand-held device and an RFID-reader 105 in the electronic power converter. For another example, the data link between the hand-held device and the electronic power converter may comprise a plug in the hand-held device and a corresponding socket in the electronic power converter.

Figure 1b illustrates a system according to another exemplifying embodiment of the invention. In this case, the data transfer equipment comprises a corded link 106 comprising plugs 107 and 108 which are connectable to a socket 109 of the memory device 101 and to a socket 110 of the electronic power converter 120. It should be noted that there is a lot of different data transfer equipments which are applicable in systems according to different embodiments of the invention.

In a system according to an embodiment of the invention, the memory device 101 is arranged to store the parameter data in an encrypted form and the data transfer equipment is arranged to decrypt the parameter data. In the exemplifying system illustrated in figure 1a, the hand-held device 103 or the RFID-reader 105 of the electronic power converter may comprise a decryption circuitry. In the exemplifying system illustrated in figure 1b, the housing of the plug 107, the housing of the plug 108, or the electronic power converter may comprise a decryption circuitry. By encrypting the parameter data, a vendor of the electrical drive can, for example, control which machine vendors are authorized to provide electrical machines as spare parts. When the decryption takes place in the electronic power converter, the vendor of the electrical drive can also control which converter vendors are authorized to provide electronic power converters as spare parts.

In a system according to an embodiment of the invention, the parameter data is arranged to contain, in addition to the inductances, at least one of the following list: winding resistances of the electrical machine 120, the nominal current of the electrical machine, the nominal voltage of the electrical machine, the moment of inertia of the rotor of the electrical machine, the nominal power factor of the electrical machine, the nominal power of the electrical machine at the nominal rotation speed.

In a system according to an embodiment of the invention, the parameter data is arranged to express a saturation curve of at least one of the inductances of the electrical machine. With the aid of the saturation curve or curves it is possible to obtain more accurate estimates for the magnetic fluxes prevailing in the electrical machine than by using constant inductance values.

The electronic power converter 121 shown in figures 1 a and 1b is an example of an electronic power converter according to an embodiment of the invention that comprises:
- a power stage for supplying voltages to windings of an electrical machine,
- a controller arranged to control the power stage at least partly on the basis of parameter data expressing one or more inductances which are specific to the electrical machine as an individual electrical machine, and
- a data interface for receiving the parameter data from an external device.

The electronic power converter can be, for example, a frequency converter suitable for supplying an alternating current machine or a controllable direct voltage supply, e.g. a thyristor bridge, suitable for supplying a direct current machine.

In an electronic power converter according to an embodiment of the invention, the data interface comprises a decryption circuitry for decrypting the received parameter data.

In an electronic power converter according to an embodiment of the invention, the controller is arranged to control the power stage at least partly on the basis of a saturation curve of at least one of the inductances of the electrical machine, wherein the saturation curve is expressed by the received parameter data.

The electrical machine 120 shown in figures 1 a and 1 b is an example of an electrical machine according to an embodiment of the invention that comprises a rotor, a stator, and a memory device attached to a housing of the electrical machine. The memory device is encoded with parameter data expressing one or more inductances which are specific to the electrical machine as an individual electrical machine and the memory device is provided with a data interface for outputting the parameter data to an external device.

In an electrical machine according to an embodiment of the invention, the memory device is arranged to store the parameter data in an encrypted form.

In an electrical machine according to an embodiment of the invention, the parameter data is arranged to express a saturation curve of at least one of the inductances of the electrical machine.

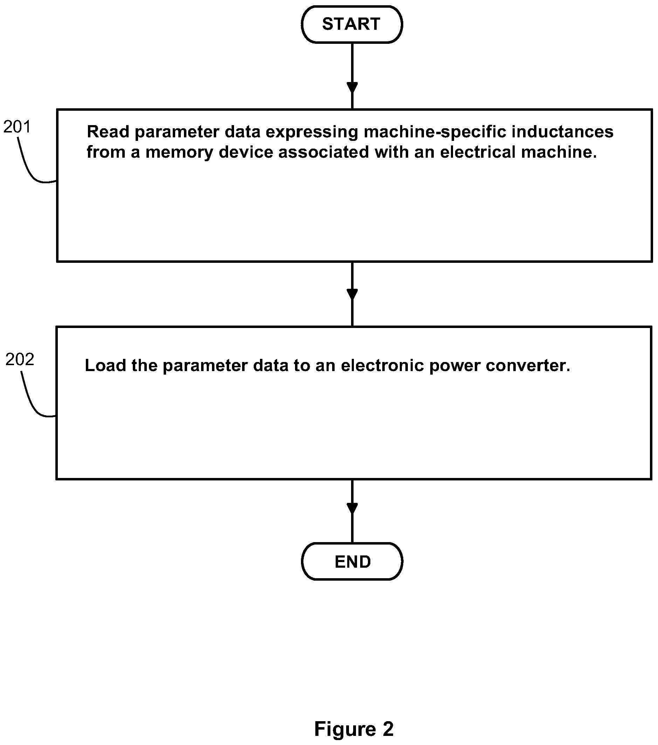

Figure 2 shows a flow chart of a method according to an embodiment of the invention for commissioning an electrical drive that comprises an electrical machine and an electronic power converter connected to the windings of the electrical machine and arranged to control the electrical machine at least partly on the basis of parameter data expressing one or more inductances which are specific to the electrical machine as an individual electrical machine. The method for commissioning the electrical drive comprises reading, in a phase 201, the parameter data from a memory device and loading, in a phase 202, the parameter data to the electronic power converter.

In a method according to an embodiment of the invention, the parameter data is read in an encrypted form from the memory device and the parameter data is decrypted when loading it to the electronic power converter.

In a method according to an embodiment of the invention, the parameter data is read from the memory device with a radio frequency identifier "RFID" reader.

In a method according to an embodiment of the invention, the parameter data expresses a saturation curve of at least one of the inductances of the electrical machine.

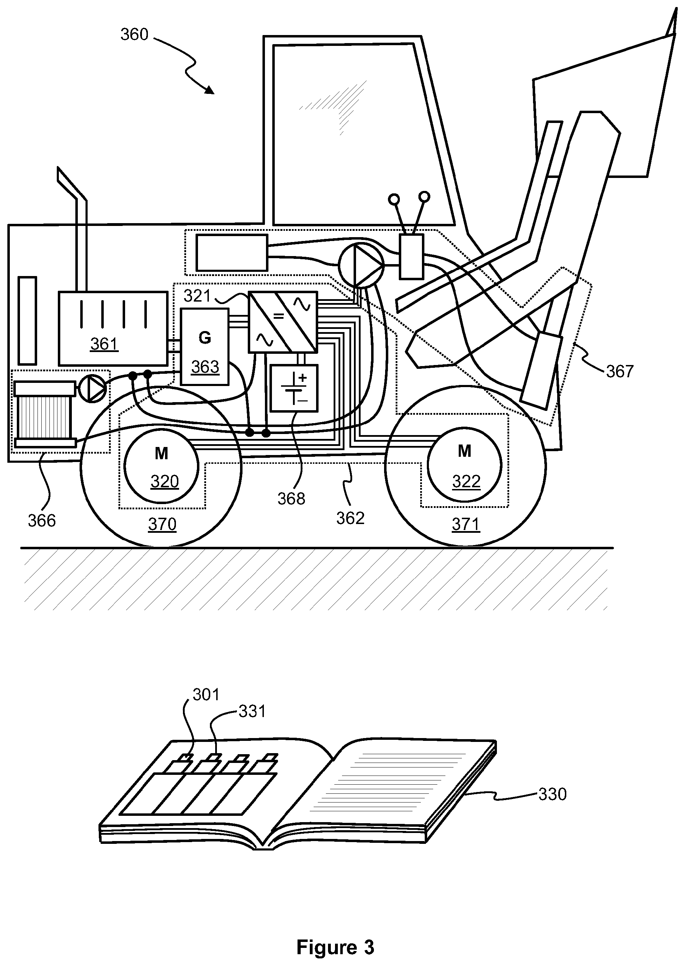

Figure 3 shows an illustration of a mobile working machine 360 according to an exemplifying embodiment of the invention. The accessories of the mobile working machine comprise a maintenance manual 330 that may provide, for example, usage instructions and information about maintenance program of the mobile working machine. In this exemplifying case, the mobile working machine is a bucket charger but the mobile working machine could as well be a tractor, a road drag, a bulldozer, or any other working machine having wheels and/or chain tracks. The mobile working machine comprises a combustion engine 361 that can be e.g. a diesel engine, an Otto-cycle engine, or a turbine engine. The mobile working machine comprises an electromechanical power transmission chain 362 between the combustion engine and wheels 370, 371 of the mobile working machine. The electromechanical transmission chain comprises a generator 363 the rotor of which is connected to the shaft of the combustion engine. The electromechanical transmission chain comprises an electronic power converter 321 and electrical motors 320, 322 at the hubs of the wheels of the mobile working machine. The electronic power converter 321 is arranged to convert the electrical voltage produced by the generator 363 into electrical voltages having amplitudes and frequencies suitable for the electrical motors 320, 322. The electronic power converter comprises separate output power stages for all the electrical motors 320, 322 so that each of the electrical motors can be run individually with a vector control. The electronic power converter 321 comprises a controller arranged to control each of the output power stages at least partly on the basis of parameter data expressing one or more inductances which are specific to the electrical motor connected to that output power stage.

The maintenance manual 330 comprises memory devices so that each of the memory devices is related to one of the electrical motors. For example, the memory device 301 can be related to the electrical motor 320 and the memory device 331 can be related to the electrical motor 322. Each memory device is encoded with parameter data expressing one or more inductances which are specific to the electrical machine related to that memory device. The electronic power converter 321 comprises a data interface for receiving the parameter data from the memory devices. The memory devices can be, for example, USB-sticks and the electronic power converter may comprise a USB-port for receiving the parameter data.

A mobile working machine according to an embodiment of the invention comprises a liquid cooling system 366 arranged to cool the electromechanical power transmission chain 362.

A mobile working machine according to an embodiment of the invention comprises a liquid cooling system arranged to cool both a hydraulic system 367 of the mobile working machine and the electromechanical power transmission chain 362.

A mobile working machine according to an embodiment of the invention comprises a liquid cooling system arranged to cool both the electromechanical power transmission chain 362 and the combustion engine 361.

In a mobile working machine according to an embodiment of the invention, the electromechanical power transmission chain comprises a battery 368 arranged to respond to peak power needs exceeding the maximum power of the combustion engine 361. The battery can be connected, for example, to a direct voltage intermediate circuit of the electronic power converter 369.

The specific examples provided in the description given above should not be construed as limiting the applicability and/or interpretation of the appended claims.

## Claims

1. A system for commissioning an electrical drive that comprises:
- an electrical machine (120, 320, 322),
- an electronic power converter (121, 321) connected to the windings of the electrical machine and arranged to control the electrical machine at least partly on the basis of parameter data expressing one or more inductances which are specific to the electrical machine as an individual electrical machine, and
- a memory device that is attached to or otherwise associated with the electrical machine (101, 301, 331) encoded with the parameter data and data transfer equipment (102, 103, 105, 106-110) for reading the parameter data from the memory device and for loading the parameter data to the electronic power converter,
**characterized in that** at least one inductance value expressed by the parameter data is different from a corresponding inductance value expressed by corresponding parameter data related to another electrical machine from a same production series as the electrical machine of the electrical drive.

2. A system according to claim 1, wherein the memory device is arranged to store the parameter data in an encrypted form and the data transfer equipment is arranged to decrypt the parameter data.

3. A system according to claim 1, wherein the memory device (101) is attached to a housing of the electrical machine.

4. A system according to claim 1, wherein the memory device (301, 331) is attached to a maintenance manual (330) of a product comprising the electrical drive.

5. A system according to claim 1, wherein the memory device is attached to a housing of the electrical machine and the system comprises another memory device attached to a maintenance manual of a product comprising the electrical drive, both of the memory devices being arranged to store the parameter data.

6. A system according to any of claims 1-5, wherein the data transfer equipment comprises a radio frequency identifier (RFID) transmitter (102) integrated with the memory device and a device (103) comprising a radio frequency identifier reader and a data interface for loading the parameter data to the electronic power converter.

7. A system according to any of claims 1-5, wherein the data transfer equipment comprises a corded link (106) comprising plugs (107, 108) connectable to a socket (109) of the memory device and to a socket (110) of the electronic power converter.

8. A system according to claim 4 or 5, wherein the memory device attached to the maintenance manual is portable and detachably attached to the maintenance manual and the data transfer equipment comprises a data interface connectable to the electronic power converter and integrated with the portable memory device.

9. A system according to any of claims 1-8, wherein the parameter data is arranged to express a saturation curve of at least one of the inductances of the electrical machine.

10. A system according to any of claims 1-9, wherein the parameter data is arranged to contain, in addition to the inductances, at least one of the following list: winding resistances of the electrical machine, nominal current of the electrical machine, nominal voltage of the electrical machine, moment of inertia of a rotor of the electrical machine, nominal power factor of the electrical machine, nominal power of the electrical machine at nominal rotation speed.

11. An electrical machine (120) comprising a rotor and a stator, wherein the electrical machine further comprises a memory device (101) attached to a housing of the electrical machine, wherein the memory device is encoded with parameter data expressing one or more inductances which are specific to the electrical machine as an individual electrical machine and the memory device is provided with a data interface (102) for outputting the parameter data to an external device, **characterized in that** at least one inductance value expressed by the parameter data is different from a corresponding inductance value expressed by corresponding parameter data related to another electrical machine from a same production series as this electrical machine.

12. A mobile working machine (360) comprising:
- a combustion engine (361), and
- an electromechanical power transmission chain (362) between the combustion engine and one or more wheels (370, 371) of the mobile working machine,
wherein the electromechanical transmission chain comprises at least one electrical machine (320, 322) according to claim 11 and at least one electronic power converter (321) comprising a power stage for supplying voltages to windings of the electrical machine, a controller arranged to control the power stage at least partly on the basis of the parameter data, and a data interface for receiving the parameter data.

13. A mobile working machine according to claim 12, wherein the mobile working machine comprises a liquid cooling system (366) arranged to cool both the electromechanical power transmission chain and a hydraulic system (367) of the mobile working machine.

14. A mobile working machine according to claim 12, wherein the mobile working machine comprises a liquid cooling system (366) arranged to cool both the electromechanical power transmission chain and the combustion engine.

15. A mobile working machine according to any of claims 12-14, wherein a maintenance manual (330) of the mobile working machine contains one or more memory devices (301, 331) each of which being encoded with parameter data expressing one or more inductances which are specific to an electrical machine of the electromechanical transmission chain.

16. A method for commissioning an electrical drive that comprises:
- an electrical machine,
- an electronic power converter connected to the windings of the electrical machine and arranged to control the electrical machine at least partly on the basis of parameter data expressing one or more inductances which are specific to the electrical machine as an individual electrical machine, and
- reading (201) the parameter data from a memory device that is attached to or otherwise associated with the electrical machine and loading (202) the parameter data to the electronic power converter,
**characterized in that** at least one inductance value expressed by the parameter data is different from a corresponding inductance value expressed by corresponding parameter data related to another electrical machine from a same production series as the electrical machine of the electrical drive.

## Patentansprüche

1. System zur Inbetriebnahme eines elektrischen Antriebs, welcher umfasst:
- eine elektrische Maschine (120, 320, 322),
- einen elektronischen Leistungswandler (121, 321), welcher mit den Wicklungen der elektrischen Maschine verbunden ist, und dazu eingerichtet ist, die elektrische Maschine zumindest teilweise auf der Grundlage von eine oder mehrere Induktivitäten ausdrückenden Parameterdaten, welche spezifisch zu der elektrischen Maschine als eine einzelne elektrische Maschine sind, zu regeln/steuern, und
- eine mit den Parameterdaten codierte Speichervorrichtung, welche an der elektrischen Maschine (101, 301, 331) angebracht ist oder auf andere Weise dieser zugeordnet ist, und eine Datenübertragungseinrichtung (102, 103, 105, 106-110) zum Lesen der Parameterdaten von der Speichervorrichtung und zum Zuführen der Parameterdaten zu dem elektronischen Leistungswandler,
**dadurch gekennzeichnet, dass**
mindestens ein durch die Parameterdaten ausgedrückter Induktivitätswert von einem entsprechenden Induktivitätswert verschieden ist, welcher durch entsprechende Parameterdaten ausgedrückt ist, die sich auf eine andere elektrische Maschine von einer gleichen Produktionsreihe, wie die elektrische Maschine des elektrischen Antriebs, beziehen.

2. System nach Anspruch 1, wobei die Speichervorrichtung zum Speichern der Parameterdaten in einer chiffrierten Form eingerichtet ist, und wobei die Datenübertragungseinrichtung zum Dechiffrieren der Parameterdaten eingerichtet ist.

3. System nach Anspruch 1, wobei die Speichervorrichtung (101) an einem Gehäuse der elektrischen Maschine angebracht ist.

4. System nach Anspruch 1, wobei die Speichervorrichtung (301, 331) einer Wartungsanleitung (330) eines den elektrischen Antrieb umfassenden Produktes beigefügt ist.

5. System nach Anspruch 1, wobei die Speichervorrichtung an einem Gehäuse der elektrischen Maschine angebracht ist und das System eine weitere Speichervorrichtung umfasst, welche einer Wartungsanleitung eines den elektrischen Antrieb umfassenden Produktes beigefügt ist, wobei beide Speichervorrichtungen zum Speichern der Parameterdaten eingerichtet sind.

6. System nach einem der Ansprüche 1 bis 5, wobei die Datenübertragungseinrichtung einen mit der Speichervorrichtung integrierten Radiofrequenz-Identifikations (RFID) -Transmitter (102) und eine Vorrichtung (103) umfasst, welche eine Radiofrequenz-Identifikations-Lesevorrichtung und eine Datenschnittstelle zum Zuführen der Parameterdaten zu dem elektronischen Leistungswandler umfasst.

7. System nach einem der Ansprüche 1 bis 5, wobei die Datenübertragungseinrichtung eine Kabelverbindung (106) umfasst, welche Stecker (107, 108) umfasst, die mit einer Buchse (109) der Speichervorrichtung und mit einer Buchse (110) des elektronischen Leistungswandlers verbindbar sind.

8. System nach Anspruch 4 oder 5, wobei die der Wartungsanleitung beigefügte Speichervorrichtung der Wartungsanleitung portabel und abnehmbar beigefügt ist und die Datenübertragungseinrichtung eine mit dem elektronischen Leistungswandler verbindbare und mit der portablen Speichervorrichtung integrierte Datenschnittstelle umfasst.

9. System nach einen der Ansprüche 1 bis 8, wobei die Parameterdaten dazu eingerichtet sind, eine Sättigungskurve von mindestens einer der Induktivitäten der elektrischen Maschine auszudrücken.

10. System nach einem der Ansprüche 1 bis 9, wobei die Parameterdaten dazu eingerichtet sind, zusätzlich zu den Induktivitäten mindestens eines der folgenden Liste zu enthalten: Wicklungswiderstände der elektrischen Maschine, Nennstrom der elektrischen Maschine, Nennspannung der elektrischen Maschine, Trägheitsmoment eines Rotors der elektrischen Maschine, Nennleistungsfaktor der elektrischen Maschine, Nennleistung der elektrischen Maschine bei Nenndrehzahl.

11. Elektrische Maschine (120) umfassend einen Rotor und einen Stator, wobei die elektrische Maschine ferner eine an einem Gehäuse der elektrischen Maschine angebrachte Speichervorrichtung (101) umfasst, wobei die Speichervorrichtung eine oder mehrere Induktivitäten ausdrückende Parameterdaten codiert, welche spezifisch für die elektrische Maschine als eine einzelne elektrische Maschine sind, und wobei die Speichervorrichtung eine Datenschnittstelle (102) zum Ausgeben der Parameterdaten zu einer externen Vorrichtung bereitstellt,
**dadurch gekennzeichnet, dass**
mindestens ein durch die Parameterdaten ausgegebener Induktivitätswert von einem entsprechenden Induktivitätswert verschieden ist, welcher durch entsprechende Parameterdaten ausgedrückt ist, die sich auf eine andere elektrische Maschine von einer gleichen Produktionsreihe, wie diese elektrische Maschine, beziehen.

12. Mobile Arbeitsmaschine (360) umfassend:
- einen Verbrennungsmotor (361), und
- eine elektromechanische Kraftübertragungskette (362) zwischen dem Verbrennungsmotor und einem oder mehreren Rädern (370, 371) der mobilen Arbeitsmaschine,
wobei die elektromechanische Übertragungskette mindestens eine elektrische Maschine (320, 322) nach Anspruch 11 und mindestens einen elektronischen Leistungswandler (321) umfasst, welcher eine Leistungsstufe, um Spannungen zu Wicklungen der elektrischen Maschine zu liefern, eine Steuer-/ Regelvorrichtung, welche dazu eingerichtet ist, die Leistungsstufe zumindest teilweise auf der Grundlage der Parameterdaten zu steuern/regeln, und eine Datenschnittstelle zum Empfangen der Parameterdaten umfasst.

13. Mobile Arbeitsmaschine nach Anspruch 12, wobei die mobile Arbeitsmaschine ein Flüssigkeitskühlsystem (366) umfasst, welches zum Kühlen sowohl der elektromechanischen Kraftübertragungskette als auch eines hydraulischen Systems (367) der mobilen Arbeitsmaschine, eingerichtet ist.

14. Mobile Arbeitsmaschine nach Anspruch 12, wobei die mobile Arbeitsmaschine ein Flüssigkeitskühlsystem (366) umfasst, welches zum Kühlen sowohl der elektromechanischen Kraftübertragungskette als auch des Verbrennungsmotors, eingerichtet ist.

15. Mobile Arbeitsmaschine nach einem der Ansprüche 12 bis 14, wobei eine Wartungsanleitung (330) der mobilen Arbeitsmaschine eine oder mehrere Speichervorrichtungen (301, 331) umfasst, von denen jede mit eine oder mehrere Induktivitäten ausdrückenden Parameterdaten codiert ist, welche spezifisch für eine elektrische Maschine der elektromechanischen Übertragungskette sind.

16. Verfahren zur Inbetriebnahme eines elektrischen Antriebs, welcher umfasst:
- eine elektrische Maschine,
- einen elektronischen Leistungswandler, welcher mit den Wicklungen der elektrischen Maschine verbundenen ist und dazu eingerichtet ist, die elektrische Maschine zumindest teilweise auf der Grundlage der eine oder mehrere Induktivitäten ausrückenden Parameterdaten zu regeln/steuern, welche spezifisch zu einer elektrischen Maschine als eine einzelne elektrische Maschine sind, und
- Lesen (201) der Parameterdaten von einer Speichervorrichtung, welche an der elektrischen Maschine angebracht ist oder auf andere Weise dieser zugeordnet ist, und Zuführen (202) der Parameterdaten zu dem elektronischen Leistungswandler,
**dadurch gekennzeichnet, dass**
mindestens ein durch die Parameterdaten ausgedrückter Induktivitätswert von einem entsprechenden Induktivitätswert verschieden ist, welcher durch entsprechende Parameterdaten ausgedrückt wird, die sich auf eine andere elektrische Maschine aus einer gleichen Produktionsreihe, wie die elektrische Maschine des elektrischen Antriebs, beziehen.

## Revendications

1. Système permettant de mettre en service une commande électrique qui comporte :
- une machine électrique (120, 320, 322),
- un convertisseur de puissance électronique (121, 321) connecté aux enroulements de la machine électrique et conçu pour commander la machine électrique, au moins, en partie, sur la base de données de paramètres exprimant une ou plusieurs inductance(s) qui est (sont) spécifique(s) de la machine électrique en tant que machine électrique particulière, et
- un dispositif de mémoire qui est attaché, ou sinon associé, à la machine électrique (101, 301, 331) codée avec les données de paramètres et le dispositif de transfert de données (102, 103, 105, 106-110) permettant de lire les données de paramètres à partir du dispositif de mémoire et de charger les données de paramètres dans le convertisseur de puissance électronique,
**caractérisé en ce que** au moins une valeur d'inductance exprimée par les données de paramètres est différente d'une valeur d'inductance correspondante exprimée par les données de paramètres correspondantes se rapportant à une autre machine électrique provenant d'une même série de fabrication que la machine électrique de la commande électrique.

2. Système selon la revendication 1, dans lequel le dispositif de mémoire est conçu pour stocker les données de paramètres sous une forme chiffrée et dans lequel le dispositif de transfert de données est conçu pour décrypter les données de paramètres.

3. Système selon la revendication 1, dans lequel le dispositif de mémoire (101) est fixé dans un logement de la machine électrique.

4. Système selon la revendication 1, dans lequel le dispositif de mémoire (301, 331) est attaché à un manuel de maintenance (330) d'un produit comportant la commande électrique.

5. Système selon la revendication 1, dans lequel le dispositif de mémoire est fixé à un logement de la machine électrique et dans lequel le système comporte un autre dispositif de mémoire attaché à un manuel de maintenance d'un produit comportant la commande électrique, les deux dispositifs de mémoire étant conçus pour stocker les données de paramètres.

6. Système selon l'une quelconque des revendications 1 à 5, dans lequel le dispositif de transfert de données comporte un émetteur d'identification par radio fréquence (RFID) (102) intégré au dispositif de mémoire et un dispositif (103) comportant un lecteur d'identification par radio fréquence et une interface avec les données pour charger les données de paramètres dans le convertisseur de puissance électronique.

7. Système selon l'une quelconque des revendications 1 à 5, dans lequel le dispositif de transfert de données comporte une liaison filaire (106) comporte des éléments de connexion mâles (107, 108) pouvant se connecter avec un élément de connexion femelle (109) du dispositif de mémoire et avec un élément de connexion femelle (110) du convertisseur de puissance électronique.

8. Système selon la revendication 4 ou 5, dans lequel le dispositif de mémoire attaché au manuel de maintenance est portable et est attaché, de façon à pouvoir être détaché, au manuel de maintenance et dans lequel le dispositif de transfert de données comporte une interface avec les données pouvant être connectée au convertisseur de puissance électronique et intégrée au dispositif de mémoire portable.

9. Système selon l'une quelconque des revendications 1 à 8, dans lequel les données de paramètres sont conçues pour exprimer une courbe de saturation d'au moins l'une des inductances de la machine électrique.

10. Système selon l'une quelconque des revendications 1 à 9, dans lequel les données de paramètres sont conçues pour contenir, en plus des inductances, au moins l'un de la liste suivante : résistances de l'enroulement de la machine électrique, courant nominal de la machine électrique, tension nominale de la machine électrique, moment d'inertie d'un rotor de la machine électrique, facteur de puissance nominal de la machine électrique, puissance nominale de la machine électrique à la vitesse de rotation nominale.

11. Machine électrique (120) comportant un rotor et un stator, dans laquelle la machine électrique comporte, de plus, un dispositif de mémoire (101) fixé à un logement de la machine électrique, dans laquelle le dispositif de mémoire est codé avec des données de paramètres exprimant une ou plusieurs inductance(s), laquelle (lesquelles) est (sont) spécifique(s) de la machine électrique en tant que machine électrique particulière et dans laquelle le dispositif de mémoire est doté d'une interface avec les données (102) permettant de délivrer les données de paramètres à un dispositif externe, **caractérisée en ce que** au moins une valeur d'inductance exprimée par les données de paramètres est différente de la valeur d'inductance correspondante exprimée par des données de paramètres correspondantes relatives à une autre machine électrique provenant d'une même série de fabrication que cette machine électrique.

12. Machine de chantier mobile (360) comportant :
- un moteur à combustion (361), et
- une chaine de transmission de puissance électromécanique (362) entre le moteur à combustion et une ou plusieurs roue(s) (370, 371) de la machine de chantier mobile,
dans laquelle la chaine de transmission électromécanique comporte au moins une machine électrique (320, 322) selon la revendication 11 et au moins un convertisseur de puissance électronique (321) comportant un niveau de puissance pour fournir des tensions aux enroulements de la machine électrique, un contrôleur conçu pour commander le niveau de puissance, au moins en partie, sur la base des données de paramètres, et une interface avec les données pour recevoir les données de paramètres.

13. Machine de chantier mobile selon la revendication 12, dans laquelle la machine de chantier mobile comporte un système de refroidissement à liquide (366) conçu pour refroidir à la fois la chaine de transmission de puissance électromécanique et un système hydraulique (367) de la machine de chantier mobile.

14. Machine de chantier mobile selon la revendication 12, dans laquelle la machine de chantier mobile comporte un système de refroidissement à liquide (366) conçu pour refroidir à la fois la chaine de transmission de puissance électromécanique et le moteur à combustion.

15. Machine de chantier mobile selon l'une quelconque des revendications 12 à 14, dans laquelle un manuel de maintenance (330) de la machine de chantier mobile contient un ou plusieurs dispositif(s) de mémoire (301, 331), chacun étant codé avec des données de paramètres exprimant une ou plusieurs inductance(s), laquelle (lesquelles) est (sont) spécifique(s) pour une machine électrique de la chaîne de transmission électromécanique.

16. Procédé pour la mise en service d'une commande électrique, lequel comporte :
- une machine électrique,
- un convertisseur de puissance électronique connecté aux enroulements de la machine électrique et conçu pour commander la machine électrique, au moins en partie, sur la base de données de paramètres exprimant une ou plusieurs inductance (s) qui est (sont) spécifique(s) pour la machine électrique en tant que machine électrique particulière, et
- le fait de lire (201) les données de paramètres à partir d'un dispositif de mémoire qui est attaché, ou sinon associé, à la machine électrique et de charger (202) les données de paramètres dans le convertisseur de puissance électronique,
**caractérisé en ce que** au moins une valeur d'inductance exprimée par les données de paramètres est différente d'une valeur d'inductance correspondante exprimée par des données de paramètres correspondantes se rapportant à une autre machine électrique provenant d'une même série de fabrication que la machine électrique de la commande électrique.
